(19) **Europäisches Patentamt / European Patent Office / Office européen des brevets**

(11) **EP 3 464 843 B1**

(12) **EUROPEAN PATENT SPECIFICATION**

(45) Date of publication and mention
of the grant of the patent:
**31.03.2021 Bulletin 2021/13**

(21) Application number: **17727007.1**

(22) Date of filing: **08.05.2017**

(51) Int Cl.:
*F01L 9/02* (2006.01)    *F01L 1/46* (2006.01)
*F01L 1/053* (2006.01)    *F01L 1/08* (2006.01)
*F01L 1/18* (2006.01)    *F01L 13/00* (2006.01)

(86) International application number:
**PCT/SE2017/050451**

(87) International publication number:
**WO 2017/213566 (14.12.2017 Gazette 2017/50)**

(54) **FOUR STROKE INTERNAL COMBUSTION ENGINE AND THERETO-RELATED METHOD**

VIERTAKTVERBRENNUNGSMOTOR UND ZUGEHÖRIGES VERFAHREN

MOTEUR À COMBUSTION INTERNE À QUATRE TEMPS ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2016 SE 1650792**

(43) Date of publication of application:
**10.04.2019 Bulletin 2019/15**

(73) Proprietor: **Scania CV AB**
**151 87 Södertälje (SE)**

(72) Inventors:
• **OLOFSSON, Eric**
**120 65 Stockholm (SE)**
• **DAHL, Andreas**
**611 44 Nyköping (SE)**
• **LINDERYD, Johan**
**144 62 Rönninge (SE)**

• **HÖGLUND, Henrik**
**646 32 Gnesta (SE)**
• **ELIASSEN, Torbjörn**
**155 93 Nykvarn (SE)**
• **STÅLHAMMAR, Per**
**146 36 Tullinge (SE)**
• **ASPFORS, Jonas**
**155 30 Nykvarn (SE)**

(74) Representative: **Scania CV AB**
**Patents, GP 117kv**
**151 87 Södertälje (SE)**

(56) References cited:
**EP-A1- 0 397 521**    **EP-A2- 1 239 130**
**GB-A- 467 242**    **GB-A- 2 214 981**
**GB-A- 2 402 708**    **US-A1- 2003 056 745**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a four stroke internal combustion engine. The present invention further relates to a method for controlling a four stroke internal combustion engine. According to further aspects, the invention relates to a computer program for performing a method for controlling a four stroke internal combustion engine, as well as a computer program product for performing a method for controlling a four stroke internal combustion engine.

BACKGROUND

A piston of a four stroke internal combustion engine, ICE, performs four strokes, an intake stroke, a compression stroke, a power stroke, and an exhaust stroke in a cylinder of the ICE. A conventional four stroke ICE has the same geometrical compression ratio and expansion ratio, i.e. the compression stroke has the same length as the expansion stroke. The working medium is compressed during the compression stroke from bottom dead centre, BDC, of the piston to top dead centre, TDC, of the piston. A certain amount of energy is added around the TDC as the working medium combusts. Thereafter the working medium is expanded during the power stroke. Since the working principle of the conventional ICE involves the same geometrical compression ratio and expansion ratio, there is a lot of power still remaining in the cylinder when the piston reaches the BDC. This is an intrinsic characteristic of the conventional ICE. The power remaining in the cylinder at high load corresponds to approximately 30 % of the brake power and can theoretically be extracted in e.g. a turbine connected to an exhaust arrangement of the cylinder. The brake power of an ICE is the power available at an output shaft/crankshaft of the ICE.

The exhaust arrangement of the ICE has to be opened before the piston reaches its BDC during the power stroke. Otherwise, if the exhaust arrangement would open later, e.g. when the piston reaches the BDC, the internal pressure from the exhaust gases (working medium) inside the cylinder would impede the movement of the piston towards the TDC during the exhaust stroke. Accordingly, available engine power would be reduced.

The opening of the exhaust arrangement before the piston reaches the BDC during the power stroke permitting a portion of the exhaust gases to escape through the exhaust arrangement, is referred to as blowdown. The term blowdown may also be used in connection with the exhaust gases escaping through the exhaust arrangement prior to the piston reaching BDC and after the piston has reached BDC, while the pressure inside the cylinder exceeds the pressure in an exhaust system downstream of the exhaust arrangement.

The exhaust arrangement of a conventional ICE comprises at least one poppet valve. A poppet valve is a robust and durable solution able to withstand a cylinder pressure of 25 MPa and a cylinder gas temperature of more than 2000 K while remaining gas tight. However, a poppet valve controlled by a camshaft has a drawback in that it is at rest when it starts to open, which entails a slow initial opening speed of the poppet valve. Thus, the poppet valve throttles an outflow of exhaust gases through the exhaust arrangement during at least an initial portion of the blowdown, which reduces the available energy in the exhaust gases in a non-reversible process. Expressed differently, a camshaft controlled poppet valve produces a large percentage of irreversible pressure losses due to throttling of the exhaust gases as they pass the poppet valve.

As indicated above, a four stroke ICE may comprise a turbine for utilising exhaust gas pressure to drive a turbine wheel of the turbine. From the discussion above it follows that low loss of the exhaust gases from the cylinder to a turbine is problematic to achieve.

US 4535592 discloses a turbo compound engine of internal combustion type having conventional reciprocally movable pistons, cylinders, manifolds, fuel-oxygen admixing apparatus or fuel injection, firing apparatus or compression ignition, and incorporating the improvement of respective nozzle means for conveying the hot, moderately high pressure combustion products (exhaust gases) from the respective cylinders to one or more turbines. The nozzle means have its inlet and discharge ends connected, respectively, with the respective boundary walls of respective combustion chambers or cylinders and with the inlet to a turbine. A quick opening nozzle valve admits exhaust gas from the respective cylinder to the nozzle means. Thus, an efficient use of exhaust gases by a turbine employed with the engine is provided.

US 6244257 discloses an internal combustion engine having electrically controlled hydraulic linkages between engine cams and engine cylinder valves. Hydraulic fluid is selectively released from the associated hydraulic linkage to permit lost motion between an engine cam and a relevant engine cylinder valve. Electrically controlled hydraulic fluid valves are used to produce the selective release of hydraulic fluid from the hydraulic linkages. By means of the hydraulic linkages the response of an engine cylinder valve to a cam lobe may be modified. By means of the hydraulic linkages a cam lobe for opening an intake valve may be skipped.

The mode of operation of the engine may be changed e.g., from positive power mode to compression release engine braking mode or vice versa, or more subtle changes may be made to modify the timing and/or extent of engine cylinder valve openings to optimize engine performance for various engine or vehicle operating conditions e.g., different engine or vehicle speeds.

US 2007/0144467 discloses a valve timing gear of an internal combustion engine having hydraulic valve clearance adjusting elements. US 5996550 discloses an applied lost motion for optimization of fixed timed engine brake system of an internal combustion engine including a hydraulic linkage used to transfer motion from a valve train element, such as a cam, to an engine valve.

The purpose of the hydraulic valve devices disclosed in US 6244257, US 2007/0144467, and US 5996550 is to modify the process of opening and closing of poppet valves. However, none of them discusses the problem of the slow opening of poppet valves, or the problem with low utilisation of blowdown energy.

Document GB2402708 A discloses a linkage arrangement that is configured to prevent the motion of the valve head every alternate rotation of the camshaft.

SUMMARY

It is an object of the present invention to provide a four stroke internal combustion engine that enables recovering a relatively high percentage of the available energy from the exhaust gases.

The object is achieved by a four stroke internal combustion engine according to claim 1.

Since the linkage arrangement is configured to prevent the motion of the valve head every alternate rotation of the camshaft, such that the exhaust opening remains closed during a compression stroke of the piston it is possible to use the defined camshaft being synchronised with the crankshaft to rotate at the same rotational speed as the crankshaft, and thus, achieve a quicker opening speed of the exhaust valve than when the camshaft of the exhaust valve rotates at half the rotational speed of the crankshaft, as the camshaft does in a common four stroke internal combustion engine. Accordingly, the exhaust gases are subjected to less throttling during an initial phase of opening the exhaust valve than in internal combustion engines wherein the camshaft rotates at half the rotational speed of the crankshaft. As a result, the above mentioned object is achieved.

A large portion of the blowdown energy is thus, transferred to the turbine. That is, an initial burst of exhaust gases produced by the blowdown, in an unrestricted manner, passes through the exhaust opening and may be utilised in a turbine.

More specifically, the exhaust gases present in the cylinder, at the end of the power stroke and the beginning of the exhaust stroke, will be available for extraction of the remaining energy therein with much lower irreversible losses than has been possible in connection with an ICE wherein the camshaft rotates at half the rotational speed of the crankshaft. Thus, in an ICE according to the present invention recovery of energy from the exhaust gases in a turbine arranged downstream of the exhaust arrangement when the piston is around the BDC may be improved. The efficient transfer of the exhaust gases from the cylinder to the turbine is achieved by the fast opening exhaust valve, which considerably reduces the irreversible throttling losses typically occurring across the exhaust valves of an ICE wherein the camshaft rotates at half the rotational speed of the crankshaft.

Accordingly, the invention provides for an increased utilization of the energy available in the cylinder at the end of the expansion stroke. The invention entails the possibility to increase recovery of energy from the exhaust gases compared to an ICE with a camshaft rotating at half the rotational speed of the crankshaft, that would otherwise have been wasted in a non-reversible throttling process across the exhaust valve.

This increased recovered energy may be used to:

- Increase the work transferred from the turbine to a centrifugal compressor in order to improve the positive pumping work during induction, i.e. increased Open Cycle Efficiency, OCE, or increase relative air/fuel ratio, $\lambda$, i.e. increased Closed Cycle Efficiency, CCE.
- Drive a specific turbine that delivers power to an electrical motor/generator unit, MGU attached to a shaft of the turbine, or to the crankshaft of the ICE, i.e. turbo compounding, or to auxiliary devices of e.g. a relevant vehicle.

A number of the above mentioned alternatives for utilising the increased recovered energy may be employed simultaneously, e.g. the combination of turbo charging along with turbo compounding (electrical or mechanical), implemented with the use of a turbine. Furthermore, the negative piston pumping work during the exhaust stroke will be eliminated or at least significantly reduced, resulting in increased OCE. In summary, the present invention will result in an increase in Brake Thermal Efficiency, BTE, compared to an ICE wherein the camshaft of the exhaust valve rotates at half the speed of the crankshaft.

Since a timing of a valve is essential, the camshaft has to rotate synchronised with the crankshaft, e.g. at half the rotational speed, the same rotational speed, twice the rotational speed, etc. of the crankshaft. The inventors have realised that a camshaft rotating at the same rotational speed as the crankshaft provides a fast opening of the valve while the timing of the opening and closing of the valve controlled by an accordingly adapted lobe may still be utilised. The opening speed of the valve, v, may be expressed as $v = \omega * r$, where $\omega$ is the angular velocity of the camshaft, and r is the distance between the contact point between valve and the lobe of the camshaft and a neutral contact point between valve and the camshaft when the lobe is not lifting the valve. Instead of increasing the distance r, which would have been the intuitive choice, the inventors now have increased the angular velocity $\omega$. An even higher rotational speed of the camshaft is not physically possible since it would require a lobe having a circumferential length exceeding the available circumferential space on the camshaft if the lobe is to control the opening and closing of the valve in situations where the valve is to be maintained open close to 180 degrees CA (Crankshaft Angle) or exceeding 180 degrees CA.

Further, it has been realised by the inventors that a valve arrangement comprising a linkage arrangement may be utilised for neutralising the motion of the exhaust valve every alternate turn of the camshaft, which motion of the exhaust valve would otherwise be caused by the lobe during the compression stroke. Thus, a fast rotating camshaft may be utilised, which increases opening speed of the valve.

The four stroke ICE may comprise more than one cylinder arrangement, each cylinder arrangement forming a combustion chamber and comprising a cylinder bore, a piston arranged to reciprocate in the cylinder bore, a connecting rod connecting the piston with the crankshaft, and an exhaust arrangement for outflow of exhaust gas from the cylinder bore to a turbine. The four stroke ICE may comprise more than one turbine, such as e.g. two turbines, or one turbine for each cylinder arrangement of the ICE. In case of two turbines, the exhaust arrangements of a number of cylinder arrangements are connected to one turbine, and the exhaust arrangements of the remaining cylinder arrangements may be connected to the other turbine. The turbine may for instance form part of a turbocharger, the ICE may be a turbo compound engine, to which the turbine may be connected via the crankshaft, or the turbine may drive an electric generator.

The combustion chamber is arranged inside the cylinder arrangement, above the piston. Intake air enters the combustion chamber through an intake arrangement of the cylinder arrangement during the intake stroke of the piston. The intake air may be compressed by a turbocharger. The internal combustion engine may be e.g. a compression ignition (CI) engine, such as a Diesel type engine, or a spark ignition engine, such as an Otto type engine and comprises in the latter case a sparkplug or similar device in the cylinder arrangement. Fuel may be injected into the combustion chamber during part of the compression stroke or intake stroke of the piston, or may be entrained with the intake air. The fuel may ignite near the TDC between the compression stroke and the power stroke of the piston. The camshaft being synchronised with the crankshaft to rotate at a same rotational speed as the crankshaft means that the camshaft and the crankshaft have the same angular velocity, $\omega$.

According to a further aspect of the invention there is provided a method for controlling a four stroke internal combustion engine, the four stroke internal combustion engine comprising at least one cylinder arrangement, a crankshaft, a camshaft, and a turbine, wherein the at least one cylinder arrangement forms a combustion chamber and comprises a cylinder bore, a piston arranged to reciprocate in the cylinder bore, a connecting rod connecting the piston with the crankshaft, and an exhaust arrangement for outflow of exhaust gas from the cylinder bore to the turbine, wherein the exhaust arrangement comprises an exhaust valve and an exhaust opening, the exhaust valve comprising a valve head configured to seal against a valve seat of the exhaust opening, wherein the camshaft comprises a lobe configured to cause a motion of the valve head for opening and closing the exhaust opening, wherein an exhaust conduit extends from the exhaust opening to an inlet of the turbine, wherein the exhaust arrangement comprises a linkage arrangement configured to change the motion of the valve head caused by the lobe. The method comprises steps of:

- rotating the camshaft at a same rotational speed as the crankshaft, and
- preventing, by means of the linkage arrangement, the motion of the valve head every alternate rotation of the camshaft, such that the exhaust opening remains closed during a compression stroke of the piston.

Further features of, and advantages with, the present invention will become apparent when studying the appended claims and the following detailed description.

BRIEF DESCRIPTION OF THE DRAWINGS

Various aspects of the invention, including its particular features and advantages, will be readily understood from the example embodiments discussed in the following detailed description and the accompanying drawings, in which:

Fig. 1 schematically illustrates a four stroke internal combustion engine according to embodiments,
Fig. 2 schematically illustrates one cylinder arrangement of the four stroke internal combustion engine of Fig. 1,
Figs. 3 and 4 schematically illustrate embodiments of linkage arrangements comprising hydraulic linkages,
Fig. 5 illustrates embodiments of a linkage arrangement comprising a mechanical linkage,
Figs. 6 and 7 illustrate alternative embodiments, wherein more than one cylinder arrangement connects to a turbine,
Fig. 8 illustrates a method for controlling a four stroke internal combustion engine, and
Fig. 9 illustrates an example of a turbine map of a turbocharger.

DETAILED DESCRIPTION

Aspects of the present invention will now be described more fully. Like numbers refer to like elements throughout. Well-known functions or constructions will not necessarily be described in detail for brevity and/or clarity.

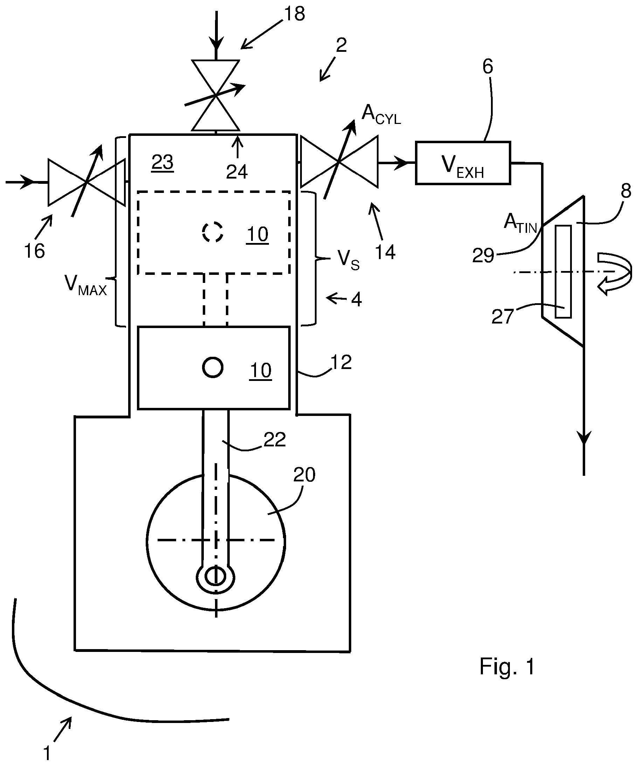

**Fig. 1** schematically illustrates a four stroke internal combustion engine, ICE, 2 according to embodiments. The ICE 2 comprises at least one cylinder arrangement 4, an exhaust conduit 6, and at least one turbine 8. **Fig. 1** also illustrates a vehicle 1 comprising a four stroke internal combustion engine (2) according to any one aspect and/or embodiment disclosed herein. The vehicle (1) may be e.g. a heavy vehicle such as a truck or a buss.

The at least one cylinder arrangement 4 comprises a piston 10, a cylinder bore 12, an exhaust arrangement 14, an inlet arrangement 16, and a fuel injection arrangement 18, and/or an ignition device. The piston 10 is arranged to reciprocate in the cylinder bore 12. In **Fig. 1** the piston 10 is illustrated with continuous lines at its bottom dead centre, BDC, and with dashed lines at its top dead centre, TDC. The cylinder arrangement 4 has a maximum volume, $V_{MAX}$, between the BDC of the piston 10 and an upper inner delimiting surface 24 of a combustion chamber 23. The combustion chamber 23 is formed above the piston 10 inside the cylinder arrangement 4. A connecting rod 22 connects the piston 10 with a crankshaft 20 of the ICE 2.

The cylinder arrangement 4 has a total swept volume, $V_S$, in the cylinder bore 12 between the BDC and the TDC. The cylinder arrangement 4 has a compression ratio, $\varepsilon$. $V_{MAX}$ may be expressed as:

$$V_{MAX} = V_S * (\varepsilon/(\varepsilon-1)).$$

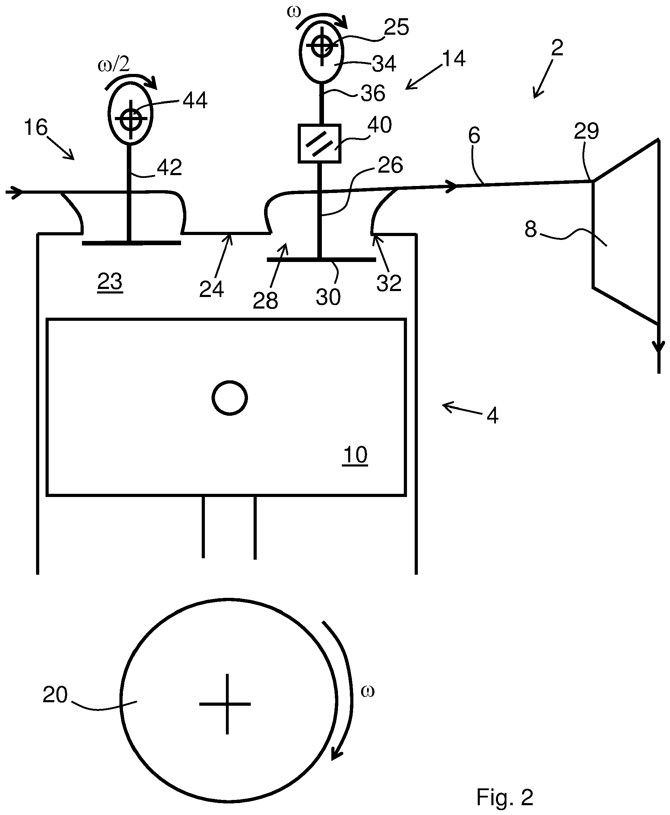

The exhaust arrangement 14 comprises an exhaust valve and an exhaust opening as will be discussed below with reference to **Fig. 2.** The exhaust arrangement 14 is arranged for outflow of exhaust gases from the cylinder bore 12 to the turbine 8. The exhaust arrangement 14 is configured to open and close an exhaust flow area, $A_{CYL}$, of the exhaust opening during an exhaust sequence of the piston reciprocation. The exhaust sequence may start before the piston 10 reaches its BDC during the power stroke and ends around the TDC of the piston between the exhaust stroke and the intake stroke.

**Fig. 2** schematically illustrates the at least one cylinder arrangement 4 of the ICE 2 of **Fig. 1.** In particular, the exhaust arrangement 14 is shown in more detail. The exhaust arrangement 14 comprises an exhaust valve 26 and an exhaust opening 28. The exhaust gases escape from the combustion chamber 23 through the exhaust opening 28 when the exhaust valve 26 is open. The exhaust conduit 6 extends from the exhaust opening 28 to the inlet 29 of the turbine 8. The exhaust valve 26 comprising a valve head 30 configured to seal against a valve seat 32 extending around the exhaust opening 28. The valve seat 32 may be provided in the cylinder arrangement 4 e.g. at the upper inner delimiting surface 24 of the combustion chamber 23.

The ICE 2 comprises a camshaft 25 for controlling movement of the exhaust valve 26, and opening and closing of the exhaust valve 26. Namely, the camshaft 25 comprises a lobe 34 configured to cause a motion of the valve head 30 for opening and closing the exhaust opening 28. Put differently, the lobe 34 provides an input to the valve head 30, i.e. the lobe 34 forms a cam, which is followed by an end portion 36 of the exhaust valve 30. The lobe 34 is eccentrically arranged on the camshaft 25. The end portion 36 of the exhaust valve 26 abuts against the lobe 34. As the camshaft 25 rotates, the end portion 36 of the exhaust valve 26 follows the lobe 34, causing the motion of the valve head 30. The exhaust valve 26 may be biased towards its closed position, as known in the art, e.g. by means of a spring.

The exhaust arrangement 14 comprises a linkage arrangement 40 configured to change the motion of the valve head 30 caused by the lobe 34.

The camshaft 25 is synchronised with the crankshaft 20 to rotate at a same rotational speed as the crankshaft 20, i.e. the camshaft 25 has the same angular velocity, $\omega$, as the crankshaft 20. The linkage arrangement 40 is configured to prevent the motion of the valve head 30 every alternate rotation of the camshaft 25, such that the exhaust opening 28 remains closed during a compression stroke of the piston 10.

The inlet arrangement 16 may comprise an inlet valve 42, the movements of which are controlled by a camshaft 44 rotating at half the angular velocity, $\omega/2$, of the crankshaft 20.

According to embodiments, the lobe 34 may have a maximum steepness of 0,5 mm / degree CA. In this manner suitable input to the valve head 30 may be provided while contact forces between the exhaust valve 26 and the lobe 34 may be maintained within manageable limits.

According to embodiments, the motion of the valve head 30 may have a maximum longitudinal opening speed within a range of 3 - 5 m/sec when the four stroke internal combustion engine (2) runs at a rotational speed within a range of 800 - 1500 rpm. In his manner a suitably high opening speed of the valve head 30 may be provided. A longitudinal opening speed is the speed of the valve along its longitudinal extension, often extending substantially perpendicularly to the valve head 30 and the valve seat 32.

According to embodiments, the motion of the valve head 30 may cause a maximum area opening speed of the exhaust opening 28 within a range of 0,75 - 1,25 m$^2$/sec. In this manner a fast opening of the exhaust valve 26 may be provided and efficient recovery of energy from the exhaust gases in a turbine arranged downstream of the exhaust arrangement may be achieved.

Returning to **Fig. 1,** the turbine 8 has an inlet 29 and comprises a turbine wheel 27. The inlet 29 of the turbine 8 has a turbine inlet area, $A_{TIN}$, wherein the at least one cylinder arrangement 4 forms a combustion chamber 23. The cylinder arrangement 4 has a maximum volume, $V_{MAX}$, between a bottom dead centre, BDC, of the piston 10 and an upper inner delimiting surface 24 of the combustion chamber 23. The exhaust conduit 6 may have an exhaust conduit volume, $V_{EXH}$, $\leq$ 0.5 times the maximum volume, $V_{MAX}$.

The turbine wheel inlet area, $A_{TIN}$, is provided at an opening of a housing of the turbine where the exhaust gases are admitted to the turbine wheel 27. The turbine wheel inlet area, $A_{TIN}$, may suitably be the nozzle throat area of the turbine 8. The nozzle throat area may also be referred to as turbine house throat area, turbine house critical area, or similar and may often be specified for a specific turbine. In cases the nozzle throat is not specified for a specific turbine, and/or the position of the nozzle throat area is not specified, the turbine wheel inlet area, $A_{TIN}$, extends perpendicularly to a flow direction of the exhaust gases. In embodiments of turbines where the exhaust conduit extends along a portion of the turbine wheel e.g. in a volute, such as e.g. in a twin scroll turbocharger, the turbine wheel inlet area, $A_{TIN}$, is defined at the section of the exhaust conduit where the turbine wheel is first exposed to the exhaust gases emanating from the relevant cylinder arrangement.

The exhaust conduit 6 connects the exhaust arrangement 14 with the turbine 8. The exhaust conduit 6 has an exhaust conduit volume, $V_{EXH}$. In **Fig. 1** the exhaust conduit volume, $V_{EXH}$, is illustrated as a box. In practice, the exhaust conduit 6 extends between the exhaust flow area, $A_{CYL}$, and the turbine wheel inlet area, $A_{TIN}$. Accordingly, the exhaust conduit volume, $V_{EXH}$ is formed by the volume of the exhaust conduit between the exhaust flow area, $A_{CYL}$, of the exhaust opening 28 and the turbine wheel inlet area, $A_{TIN}$. In these embodiments the exhaust conduit 6 fluidly connects only the exhaust opening 28 with the inlet 29 of the turbine 8. That is, the exhaust conduit 6 forms a separate conduit extending between the exhaust flow area, $A_{CYL}$, and the turbine wheel inlet area, $A_{TIN}$. The separate conduit does not have any other inlets or outlets for exhaust gases. Thus, the turbine wheel inlet area, $A_{TIN}$, is a dedicated inlet area of the turbine 8 for the particular exhaust flow area, $A_{CYL}$, connected thereto via the exhaust conduit 6.

As mentioned above, the exhaust conduit volume, $V_{EXH}$, may be $\leq$ 0.5 times the maximum volume, $V_{MAX}$, i.e. $V_{EXH} \leq 0.5 * V_{MAX}$. In this manner the blowdown energy of the exhaust gases may be efficiently utilised in the turbine 8.

According to some embodiment, the exhaust arrangement 14 may be configured to expose the exhaust flow area, $A_{CYL}$, at a size of at least 0.22 times the maximum volume, $V_{MAX}$, i.e. $A_{CYL} \leq 0.22 * V_{MAX}$, when the piston 10 is at the BDC. Accordingly, the criterion: $A_{CYL} / V_{MAX} \geq 0.22$ m$^{-1}$ may be fulfilled when the piston 10 is at the BDC. Such a criterion may further improve efficient transfer of blowdown energy from the cylinder arrangement to the turbine 8.

The turbine wheel 27 of the turbine 8 may be connected to an impeller (not shown) for compressing and transporting intake air to the inlet arrangement 16. According to some embodiments, the turbine wheel 27 may be an axial turbine wheel. A turbine 8 comprising an axial turbine wheel may provide the low back pressure discussed herein. However, according to alternative embodiments the turbine wheel may be a radial turbine wheel, which also may provide the low back pressure discussed herein.

According to some embodiments, the cylinder arrangement 4 may have a total swept volume, $V_S$, in the cylinder bore 12 between the bottom dead centre, BDC, and the top dead centre, TDC, of the piston 10, wherein $0.3 < V_S < 4$ litres. Mentioned purely as an example, in the lower range of Vs, the cylinder arrangement 4 may form part of an internal combustion engine for a passenger car, and in the middle and higher range of Vs, the cylinder arrangement 4 may form part of an internal combustion engine for a heavy load vehicle such as e.g. a truck, a bus, or a construction vehicle. Also in the higher range of Vs, the cylinder arrangement 4 may form part of an internal combustion engine for e.g. a generator set (genset), for marine use, or for rail bound (train) use.

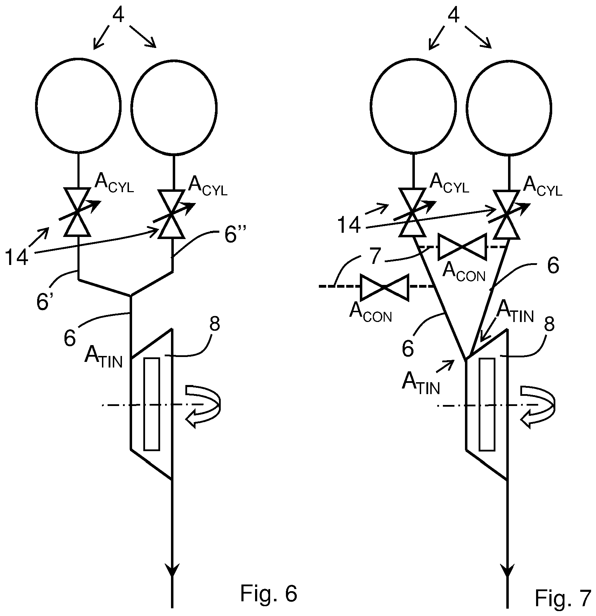

**Figs. 6 and 7** illustrate alternative embodiments, wherein more than one cylinder arrangement may connect to a turbine 8. **Fig. 6** illustrates embodiments wherein two cylinder arrangements 4 are connected to a turbine 8 via one turbine wheel inlet area, $A_{TIN}$, i.e. the two cylinder arrangements 4 share the same turbine wheel inlet area, $A_{TIN}$. Accordingly, the exhaust conduit branches 6', 6" from the exhaust port arrangements 14 of the two cylinder arrangements 4 are connected to form a common exhaust conduit 6 leading to the turbine 8 and the turbine wheel inlet area, $A_{TIN}$. Since there exists a certain degree of crossflow between the two exhaust conduit branches 6', 6" as exhaust gases flow from one of the cylinder arrangements 4 to the turbine wheel inlet area, $A_{TIN}$, the above discussed criteria: $V_{EXH} \leq 0.5 * V_{MAX}$ may be valid for the collective exhaust conduit volume, $V_{EXH}$, of both exhaust conduit branches 6', 6" and the common exhaust conduit 6. **Fig. 7** illustrates embodiments wherein two cylinder arrangements 4 are connected to a turbine 8 via two separate exhaust conduits 6, each leading to one turbine wheel inlet area, $A_{TIN}$. The turbine wheel inlet areas, $A_{TIN}$, are positioned adjacent to each other such that they may be considered to be connect to the turbine 8 at one position of the turbine 8. The crossflow between two turbine wheel inlet areas, $A_{TIN}$, is negligible. Accordingly, for each of the exhaust conduits 6 the above discussed criteria: $V_{EXH} \leq 0.5 * V_{MAX}$ may be valid.

In general, volumes of connections to/from the exhaust conduits 6 are not considered to form part of the exhaust conduit volume, $V_{EXH}$, if such connections have a cross sectional area below a limit value. According to embodiments According to embodiments, the exhaust conduit volume, $V_{EXH}$, may exclude all volumes connected to the exhaust conduit via a connection having a minimum connection cross section area, $A_{CON}$, ≤ 0.022 times the maximum volume, $V_{MAX}$, i.e. $A_{CON}$ ≤ 0.022 * $V_{MAX}$. With such a small cross sectional area, $A_{CON}$, any crossflow of exhaust gases through a connection is negligible. In **Fig. 7** two example connections 7 with minimum connection cross section areas, $A_{CON}$, have been indicated. Mentioned purely as an example, such connections 7 may form part of an exhaust gas recirculation (EGR) system, or may connect to sensors, etc.

For a particular turbine, turbine rig test results are plotted in a turbine map. Based on such turbine maps a suitable turbine may be selected for a particular four stroke internal combustion engine. In one type of turbine map a number of turbine speed lines may be plotted against a corrected flow and pressure ratios over the turbine. Such turbine speed lines may represent e.g. so-called reduced turbine rotational speeds, $RPM_{RED}$. The corrected flow may be represented e.g. by a reduced mass flow, $m'_{RED}$. The standards SAE J1826 and SAE J922 relate to test procedures, nomenclature and terminology of turbochargers, and are incorporated herein by reference for further details of turbine maps and parameters related to turbochargers.

$$m'_{RED} = m' * (T)^{1/2} / P ,$$

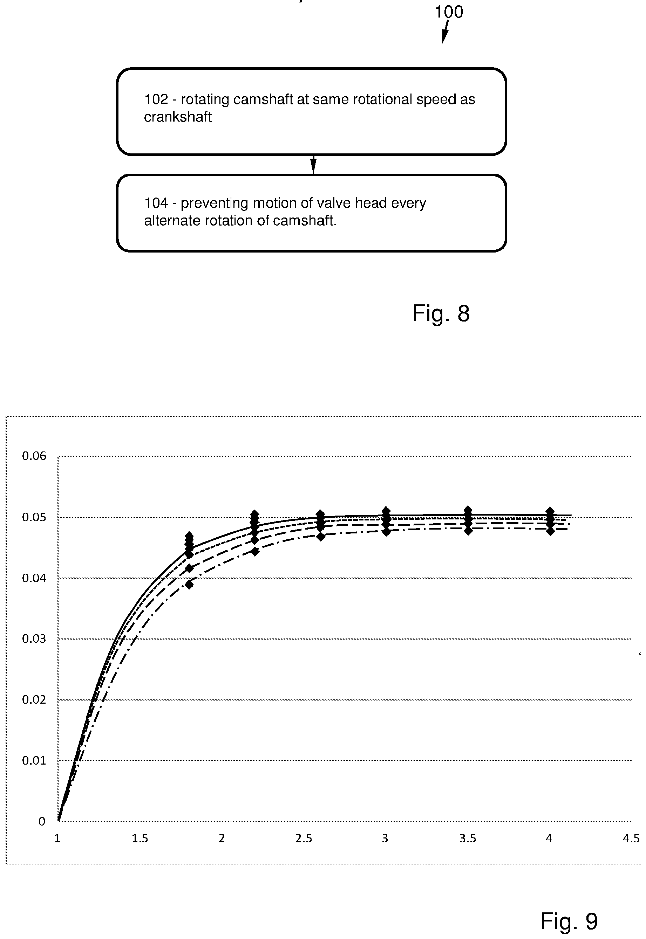

wherein $m'$ is an actual mass flow rate through the turbine wheel, T is the exhaust gas temperature before the turbine wheel, and P is the exhaust gas pressure before the turbine wheel. In **Fig. 9** a schematic example of a turbine map of turbine, such as a turbocharger is illustrated.

For a relevant turbine a normalised effective flow area, y, may be defined as $\gamma = A_{TURB}/V_{MAX}$. Thus, the turbine wheel inlet area, $A_{TIN}$, may be defined in relation to the maximum volume, $V_{MAX}$, of the cylinder arrangement. Namely,

$$A_{TURB} = (A_{TIN}/A_{TOT}) * m'_{RED} * (R/(\kappa(2/(\kappa +1)^X)))^{1/2} ,$$

wherein $X = (\kappa + 1)/(\kappa -1)$. As mentioned above, $A_{TIN}$, is the turbine wheel inlet area connected to the exhaust flow area, $A_{CYL}$, of a cylinder arrangement. The turbine may have more than one inlet area. Accordingly, $A_{TOT}$ is a total inlet area of the turbine, i.e. $A_{TIN}$ and any additional turbine wheel inlet areas, $A_{TINX}$, etc. ($A_{TOT} = A_{TIN} + A_{TINX} + ...$). R is the specific gas constant. An example value of R may be 287. $\kappa = C_p / C_v$, where $C_p$ is the specific heat capacity at constant pressure of the exhaust gases and $C_v$ is the specific heat capacity of the exhaust gases at constant volume. An example value of $\kappa$ may be 1.4 at a temperature of 293 K.

$A_{TURB}$ may be obtained at a reduced mass flow, $m'_{RED}$, of the turbine at e.g. 2.5 - 3.5 pressure ratio between an inlet side and an outlet side of the turbine and at a tip speed of e.g. 450 m/s of the turbine wheel. $A_{TURB}$ for a particular turbine may be obtained e.g. by extracting the reduced mass flow, $m'_{RED}$, from a relevant turbine map for a turbine speed corresponding to the relevant tip speed at the relevant pressure ratio, and calculating $A_{TURB}$ with relevant data for the turbine and its operating conditions. Thereafter, $\gamma$ may be calculated. According to embodiments herein $\gamma > 0.22$ m$^{-1}$.

According to some embodiments, the turbine 8 has a normalised effective flow area, y, defined as $\gamma = A_{TURB}/V_{MAX}$, wherein $\gamma > 0.22$ m$^{-1}$, wherein $A_{TURB} = (A_{TIN}/A_{TOT}) * m'_{RED} * (R/(K(2/(K +1)^X)))^{1/2}$, wherein $X = (\kappa + 1)/(\kappa -1)$, wherein $A_{TOT}$ is a total inlet area of the turbine 8, and wherein $A_{TURB}$ is obtained at a reduced mass flow, $m'_{RED}$, of the turbine 8 at 2.5 - 3.5 pressure ratio between an inlet side and an outlet side of the turbine 8 and at a tip speed of 450 m/s of the turbine wheel.

In such a turbine 8 efficiently transferred blowdown energy from the fast opening exhaust opening may be utilised. Accordingly, a low pressure drop may be provided as the exhaust gases are transferred from the cylinder arrangement to the turbine and the blowdown energy may be transformed into useful work as the exhaust gases expand over the turbine wheel of the turbine 8.

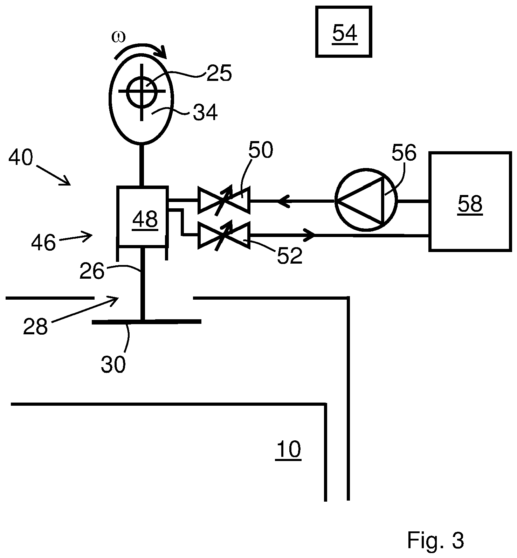

**Fig. 3** illustrates schematically embodiments of a linkage arrangement 40 comprising a hydraulic linkage 46 arranged between the camshaft 25 and the valve head 30. The hydraulic linkage 46, in a first mode, is configured to transfer an input of the lobe 34 to the valve head 30 to cause the motion of the valve head 30. The hydraulic linkage 46, in a second mode, is configured to prevent the motion of the valve head 30. Since hydraulics are well developed and numerous constructional elements are known in the field of hydraulics, a hydraulic linkage 46 provides basis for a responsive and controllable linkage arrangement 40.

The hydraulic linkage 46 comprises a hydraulic cylinder 48 forming part of a valve stem of the exhaust valve 26. As the camshaft 25 rotates at the same speed as the crankshaft of the ICE, the hydraulic cylinder 48 is alternately filled with, and at least partially emptied from, hydraulic liquid. An inlet valve 50 and an outlet valve 52 are controlled by a controller 54 such that the hydraulic cylinder 48 is filled with hydraulic liquid prior to or during an exhaust stroke of the piston 10. Thus, the hydraulic linkage 46 is in the first mode. Moreover, the inlet valve 50 and the outlet valve 52 are controlled by the controller 54 such that the outlet valve 52 is prior to and during a compression stroke of the piston 10. Thus, the hydraulic linkage 46 is in the second mode. A pump 56 may pressurise the hydraulic liquid such that when the inlet valve 50 is open, the hydraulic cylinder 48 is filled with hydraulic liquid. A tank 58 for the hydraulic liquid may be provided.

The hydraulic liquid may be hydraulic oil. The fuel of the ICE may alternative be utilised as a hydraulic liquid for the hydraulic linkage 46. Other hydraulic liquids may be used as a further alternative.

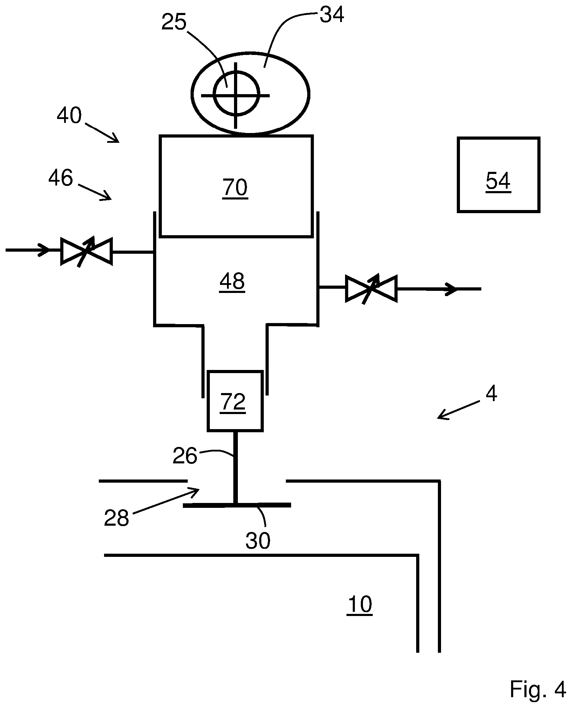

**Fig. 4** schematically illustrates alternative embodiments of a linkage arrangement 40 comprising a hydraulic linkage 46 arranged between the camshaft 25 and the valve head 30. These embodiments resemble in much the embodiments of **Fig. 3.** Mainly the differences between the two embodiments will be discussed in the following. Again, the hydraulic linkage 46, in a first mode, is configured to transfer an input of the lobe 34 to the valve head 30 to cause the motion of the valve head 30. The hydraulic linkage 46, in a second mode, is configured to prevent the motion of the valve head 30.

The hydraulic linkage 46 comprises a hydraulic cylinder 48 connected to a stem of the exhaust valve 26. The hydraulic cylinder 48 comprises a first piston 70 and a second piston 72. The first piston 70 abuts against the lobe 34 of the camshaft 25. The second piston 72 is connected to the exhaust valve 26. Again, the hydraulic cylinder 48 is alternately filled with, and emptied from, hydraulic liquid such that the hydraulic cylinder 48 in the first mode is filled with hydraulic liquid, and in the second mode is at least partly emptied from hydraulic liquid.

Thus, in the first mode the motion of the first piston 70, caused by the lobe 34, is transferred to the second piston 72, and in the second mode the first piston 70 does not affect the second piston 72.

According to embodiments, the hydraulic linkage 46 comprises a first piston 70 connected to the crankshaft 25 and a second piston 72 connected to the valve head 30, and wherein the first piston 70 has a larger area than the second piston 72. That is, the first piston 70 has a larger area inside the hydraulic cylinder 48 than the second piston 72. Accordingly, a hydraulic gearing is achieved in the hydraulic cylinder 48. The second piston 72 will travel a longer distance than the first piston 70, proportionately to the area difference between the first and second pistons 70, 72. Also the speed of the second piston 72, and thus, the opening speed of the valve head 30 will be proportionately larger than the motion speed of the first piston 70 caused by the lobe 34 in the first mode. Accordingly, the opening speed of the exhaust opening 28 may be increased above that achieved by a 1:1 gearing.

In alternative embodiments where no gearing is deemed necessary, the first and second pistons 70, 72 may have the same area inside the hydraulic cylinder 48.

Various other hydraulic linkages known in the prior art, such e.g. from US 6244257, US 2007/0144467, or US 5996550 may alternatively be utilised to prevent the motion of the valve head 30 every alternate rotation of the camshaft 25, such that the exhaust opening 28 remains closed during a compression stroke of the piston 10. Merely, the control of such hydraulic linkages, and the stoke length of such hydraulic linkages, have to be adapted to ensure that the exhaust valve remains closed during the compression stroke.

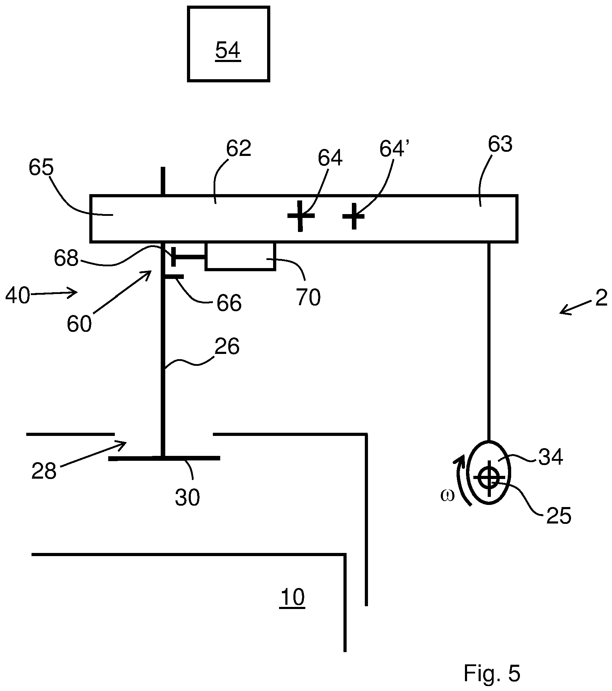

**Fig. 5** illustrates embodiments of a linkage arrangement 40 comprising a mechanical linkage 60 arranged between the camshaft 25 and the valve head 30. The mechanical linkage 60, in a first mode, may be configured to transfer an input of the lobe 34 to the valve head 30 to cause the motion of the valve head 30. The mechanical linkage 60, in a second mode, may be configured to prevent the motion of the valve head 30. In this manner an alternative to a hydraulic linkage may be provided.

The exhaust valve 26 is connected to first end portion 63 of a lever 62, such as a rocker lever 62. The rocker lever 62 is pivoted back and forth about a pivot axis 64 by the camshaft 25 and its lobe 34. Thus, the exhaust valve 26 is moved upwardly and downwardly. Again, the exhaust valve 26 may be biased towards its closed position.

Since the camshaft 25 rotates at the same rotational speed as the crankshaft of the ICE 2, every alternate downward movement of the exhaust valve 26 is eliminated by the mechanical linkage 60. For this purpose, a stem of the exhaust valve 26 is slidably arranged in the rocker lever 62 at a second end portion 65 of the lever 62 and the mechanical linkage 60 comprises a pin 66 extending from the stem of the exhaust valve 26, a blocking member 68, and an actuator 70. When the blocking member 68 is positioned between the pin 66 and the rocker lever 62, as illustrated in **Fig. 5,** a downward movement of the left-hand side of the rocker lever 62 is transferred to the exhaust valve 26 which accordingly, will follow the downward movement of the rocker lever 62 and open the exhaust opening 28. Every alternate rotation of the camshaft 25, i.e. during the compression stroke of the piston 10, the blocking member 68 is moved away from the pin 66 by the actuator 70. Thus, during the downward movement of the left-hand side of the rocker lever 62, the stem of the exhaust valve 26 slides within the rocker lever 62 and accordingly, the exhaust opening 28 remains closed. A controller 54 controls the actuator 70 to move the blocking member 68 in and out of engagement between the pin 66 and the rocker lever 62 every alternate rotation of the camshaft 25.

According to embodiments, the mechanical linkage 60 comprises a lever 62 connected at a first end portion 63 to the camshaft 25 and at a second end portion 65 to the valve head 30, and wherein the lever 62 pivots about an axis 64' arranged such that the second end portion 65 has a higher traveling speed than the first end portion 63. Thus, a mechanical gearing may be achieved which increases the opening speed of the exhaust opening 28 above that achieved by a 1:1 gearing. As shown in **Fig. 5** the axis 64' is offset from a midpoint in between the first and second end portions 63, 65 of the lever 62 towards the first end portion 63. The traveling speed may be e.g. an angular speed of the lever 62, or e.g. a longitudinal speed of the exhaust valve 26.

An alternative mechanical linkage may operate with two parallel arms pivotable about a pivot axis. One of the arms is fixed to a pivot axle concentric with the pivot axis and abuts against a lobe of the camshaft. The other arm is freely pivotable about the pivot axis and connected to the exhaust valve and transfers downward movements of the arm to the exhaust valve. Operated in accordance with embodiments of the present invention, every alternate rotation of the camshaft, the two arms are locked to each other, e.g. by means of a pin extending through both arms, which will cause the lobe of the camshaft to open the exhaust valve, and every other rotation the two arms are not locked to each other, which will cause the arm abutting against the lobe to simply pivot about the pivot axis without affecting the exhaust valve. Such a mechanical linkage resembles the Vtech (TM) technology by Honda ®.

According to some embodiments, the camshaft 25 may be an overhead camshaft 25, e.g. as illustrated in **Figs. 2 - 4.**

**Fig. 8** illustrates a method 100 for controlling a four stroke internal combustion engine, ICE. The ICE may be an ICE according to any aspect and/or embodiment discussed herein.

The method 100 comprises steps of:

- rotating 102 the camshaft at a same rotational speed as the crankshaft, and
- preventing 104, by means of a linkage arrangement, a motion of the valve head every alternate rotation of the camshaft, such that the exhaust opening remains closed during a compression stroke of the piston.

According to a further aspect of the invention there is provided a computer program for performing a method for controlling a four stroke internal combustion engine, wherein the computer program comprises computer readable code configured to cause a central processing unit of a control unit of the four stroke internal combustion engine to perform a method according to aspects and/or embodiments disclosed herein.

According to a further aspect of the invention there is provided a computer program product for performing a method for controlling a four stroke internal combustion engine, wherein the computer program product comprises computer readable code configured to cause a central processing unit of a control unit of the four stroke internal combustion engine to perform a method according to aspects and/or embodiments disclosed herein.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims. For instance, the exhaust arrangement may comprise more than one exhaust valve, e.g. two exhaust valves, which are controlled in accordance with the present invention. The linkage arrangement 40 may comprise both a hydraulic linkage 46 and a mechanical linkage 60.

## Claims

1. A four stroke internal combustion engine (2) comprising at least one cylinder arrangement (4), a crankshaft (20), and a camshaft (25), wherein

   the at least one cylinder arrangement (4) forms a combustion chamber (23) and comprises a cylinder bore (12), a piston (10) arranged to reciprocate in the cylinder bore (12), a connecting rod connecting the piston (10) with the crankshaft (20), and an exhaust arrangement (14) for outflow of exhaust gas from the cylinder bore (12), wherein
   the cylinder arrangement (4) has a maximum volume, $V_{MAX}$, between a bottom dead centre, BDC, of the piston (10) and an upper inner delimiting surface (24) of the combustion chamber (23), wherein
   the exhaust arrangement (14) comprises an exhaust valve (26) and an exhaust opening (28), the exhaust valve (26) comprising a valve head (30) configured to seal against a valve seat (32) of the exhaust opening (28), wherein
   the camshaft (25) comprises a lobe (34) configured to cause a motion of the valve head (30) for opening and closing the exhaust opening (28), wherein
   and wherein
   the exhaust arrangement (14) comprises a linkage arrangement (40) configured to change the motion of the valve head (30) caused by the lobe (34),

the camshaft (25) is synchronised with the crankshaft (20) to rotate at a same rotational speed as the crankshaft (20), wherein
the linkage arrangement (40) is configured to prevent the motion of the valve head (30) every alternate rotation of the camshaft (25), such that the exhaust opening (28) remains closed during a compression stroke of the piston (10)
**characterised in that**
the four stroke internal combustion engine comprises a turbine (8) and an exhaust conduit (6) extending from the exhaust opening (28) to an inlet of the turbine (8), wherein the inlet (29) of the turbine (8) has a turbine inlet area, $A_{TIN}$, and wherein
the exhaust conduit (6) has an exhaust conduit volume, $V_{EXH}$, $\leq$ 0.5 times the maximum volume, $V_{MAX}$.

2. The four stroke internal combustion engine (2) according to any one of the preceding claims, wherein the lobe (34) has a maximum steepness of 0,5 mm / degree CA.

3. The four stroke internal combustion engine (2) according to any one of the preceding claims, wherein the motion of the valve head (30) has a maximum longitudinal opening speed within a range of 3 - 5 m/sec when the four stroke internal combustion engine (2) runs at a rotational speed within a range of 800 -1500 rpm.

4. The four stroke internal combustion engine (2) according to any one of the preceding claims, wherein the motion of the valve head (30) causes a maximum area opening speed of the exhaust opening (28) within a range of 0,75 - 1,25 $m^2$/sec.

5. The four stroke internal combustion engine (2) according to any one of the preceding claims, wherein the exhaust conduit volume, $V_{EXH}$, excludes all volumes connected to the exhaust conduit (6) via a connection (7) having a minimum connection cross section area, $A_{CON}$, $\leq$ 0.022 times the maximum volume, $V_{MAX}$.

6. The four stroke internal combustion engine (2) according to any one of the preceding claims, wherein the exhaust conduit (6) fluidly connects only the exhaust opening (28) with the inlet (29) of the turbine (8).

7. The four stroke internal combustion engine (2) according to any one of the preceding claims, wherein the turbine (8) has a normalised effective flow area, y, defined as $\gamma = A_{TURB}/V_{MAX}$, wherein $\gamma > 0.22$ $m^{-1}$, wherein $A_{TURB} = (A_{TIN}/A_{TOT}) * m'_{RED} * (R/(\kappa(2/(\kappa +1)X)))^{1/2}$, wherein $X = (\kappa + 1)/(\kappa -1)$, wherein $A_{TOT}$ is a total inlet area of the turbine (8), and wherein $A_{TURB}$ is obtained at a reduced mass flow, $m'_{RED}$, of the turbine (8) at 2.5 - 3.5 pressure ratio between an inlet side and an outlet side of the turbine (8) and at a tip speed of 450 m/s of the turbine wheel (27).

8. The four stroke internal combustion engine (2) according to any one of the preceding claims, wherein the cylinder arrangement (4) has a total swept volume, Vs, in the cylinder bore (12) between a bottom dead centre, BDC, and a top dead centre, TDC, of the piston (10), and wherein 0.3 < Vs < 4 litres.

9. The four stroke internal combustion engine (2) according to any one of the preceding claims, wherein the linkage arrangement (40) comprises a hydraulic linkage (46) arranged between the camshaft (25) and the valve head (30), wherein the hydraulic linkage (46) in a first mode is configured to transfer an input of the lobe (34) to the valve head (30) to cause the motion of the valve head (30), and wherein the hydraulic linkage (46) in a second mode is configured to prevent the motion of the valve head (30).

10. The four stroke internal combustion engine (2) according to claim 9, wherein the hydraulic linkage (46) comprises a first piston (70) connected to the camshaft (25) and a second piston (72) connected to the valve head (30), and wherein the first piston (70) has a larger area than the second piston (72).

11. The four stroke internal combustion engine (2) according to any one of claims 1 - 9, wherein the linkage arrangement (40) comprises a mechanical linkage (60) arranged between the camshaft (25) and the valve head (30), wherein the mechanical linkage (60) in a first mode is configured to transfer an input of the lobe (34) to the valve head (30) to cause the motion of the valve head (30), and wherein the mechanical linkage (60) in a second mode is configured to prevent the motion of the valve head (30).

12. The four stroke internal combustion engine (2) according to claim 10, wherein the mechanical linkage (60) comprises a lever (62) connected at a first end portion (63) to the camshaft (25) and at a second end portion (65) to the valve head (30), and wherein the lever (62) pivots about an axis (64') arranged such that the second end portion (65) has a higher traveling speed than the first end portion (63).

13. A vehicle (1) comprising a four stroke internal combustion engine (2) according to any one of the preceding claims.

**Patentansprüche**

1. Viertaktverbrennungsmotor (2) mit wenigstens einer Zylinderanordnung (4), einer Kurbelwelle (20) und einer Nockenwelle (25), wobei

die wenigstens eine Zylinderanordnung (4) eine Brennkammer (23) bildet und eine Zylinderbohrung (12), einen Kolben (10), der dazu angeordnet ist, sich in der Zylinderbohrung (12) hin und her zu bewegen, ein den Kolben (10) mit der Kurbelwelle (20) verbindendes Pleuel und eine Auslassanordnung (14) zum Abfluss von Abgas aus der Zylinderbohrung (12) aufweist, wobei

die Zylinderanordnung (4) ein Maximalvolumen $V_{MAX}$ zwischen einem unteren Totpunkt, BDC, des Kolbens (10) und einer oberen inneren Begrenzungsfläche (24) der Brennkammer (23) hat, wobei

die Auslassanordnung (14) ein Auslassventil (26) und eine Auslassöffnung (28) aufweist, wobei das Auslassventil (26) einen Ventilteller (30) umfasst, der dazu eingerichtet ist, gegen einen Ventilsitz (32) der Auslassöffnung (28) abzudichten, wobei

die Nockenwelle (25) einen Nocken (34) aufweist, der dazu eingerichtet ist, eine Bewegung des Ventiltellers (30) zum Öffnen und Schließen der Auslassöffnung (28) zu bewirken, und wobei

die Auslassanordnung (14) eine Kopplungsanordnung (40) umfasst, die dazu eingerichtet ist, die von dem Nocken (34) bewirkte Bewegung des Ventiltellers (30) zu ändern,

die Nockenwelle (25) mit der Kurbelwelle (20) dazu synchronisiert ist, mit einer gleichen Drehzahl wie die Kurbelwelle (20) zu rotieren, wobei

die Kopplungsanordnung (40) dazu eingerichtet ist, die Bewegung des Ventiltellers (30) jede zweite Drehung der Nockenwelle (25) zu unterbinden, sodass die Auslassöffnung (28) während eines Kompressionstaktes des Kolbens (10) geschlossen bleibt,

**dadurch gekennzeichnet, dass**

der Viertaktverbrennungsmotor eine Turbine (8) und eine sich von der Auslassöffnung (28) zu einem Einlass der Turbine (8) erstreckende Abgasleitung (6) aufweist, wobei der Einlass (29) der Turbine (8) eine Turbineneinlassfläche, $A_{TIN}$, hat, und wobei

die Abgasleitung (6) ein Abgasleitungsvolumen, $V_{EXH}$, $\leq 0{,}5$ mal dem Maximalvolumen, $V_{MAX}$, hat.

2. Viertaktverbrennungsmotor (2) nach dem vorhergehenden Anspruch, bei dem der Nocken (34) eine maximale Steilheit von 0,5 mm pro Grad Nockenwellenwinkel hat.

3. Viertaktverbrennungsmotor (2) nach einem der vorhergehenden Ansprüche, bei dem die Bewegung des Ventiltellers (30) eine maximale Öffnungsgeschwindigkeit in Längsrichtung innerhalb eines Bereichs von 3 bis 5 m/s hat, wenn der Viertaktverbrennungsmotor (2) bei einer Drehzahl innerhalb eines Bereichs von 800 bis 1500 U/min läuft.

4. Viertaktverbrennungsmotor (2) nach einem der vorhergehenden Ansprüche, bei dem die Bewegung des Ventiltellers (30) eine maximale Flächenöffnungsgeschwindigkeit der Auslassöffnung (28) innerhalb eines Bereichs von 0,75 bis 1,25 m$^2$/s bewirkt.

5. Viertaktverbrennungsmotor (2) nach einem der vorhergehenden Ansprüche, bei dem das Abgasleitungsvolumen, $V_{EXH}$, alle Volumina ausschließt, die mit der Abgasleitung (6) über eine Verbindung (7) verbunden sind, welche eine kleinste Verbindungsquerschnittsfläche, $A_{CON}$, $\leq 0{,}022$ mal dem Maximalvolumen, $V_{MAX}$, haben.

6. Viertaktverbrennungsmotor (2) nach einem der vorhergehenden Ansprüche, bei dem die Abgasleitung (6) nur die Auslassöffnung (28) fluidleitend mit dem Einlass (29) der Turbine (8) verbindet.

7. Viertaktverbrennungsmotor (2) nach einem der vorhergehenden Ansprüche, bei dem die Turbine (8) eine normalisierte effektive Strömungsfläche, $\gamma$, hat, die definiert ist als $\gamma = A_{TURB}/V_{MAX}$, mit $\gamma > 0{,}22$ m$^{-1}$, wobei $A_{TURB} = (A_{TIN}/A_{TOT}) * m'_{RED} * (R/\kappa(2/\kappa+1)^X))^{1/2}$, mit $X = (\kappa + 1)/(K - 1)$, wobei $A_{TOT}$ eine Gesamteinlassfläche der Turbine (8) ist und wobei $A_{TURB}$ bei einem reduzierten Massenstrom, $m'_{RED}$, der Turbine (8) bei einem Druckverhältnis von 2,5 bis 3,5 zwischen einer Einlassseite und einer Auslassseite der Turbine (8) und einer Umfangsgeschwindigkeit des Turbinenrads (27) von 450 m/s erhalten wird.

**8.** Viertaktverbrennungsmotor (2) nach einem der vorhergehenden Ansprüche, bei dem die Zylinderanordnung (4) einen Gesamthubraum, $V_S$, in der Zylinderbohrung (12) zwischen einem unteren Totpunkt, BDC, und einem oberen Totpunkt, TDC, des Kolbens (10) hat, und wobei $0,3 < V_S < 4$ Liter ist.

**9.** Viertaktverbrennungsmotor (2) nach einem der vorhergehenden Ansprüche, bei dem die Kopplungsanordnung (40) eine zwischen der Nockenwelle (25) und dem Ventilteller (30) angeordnete hydraulische Kopplung (46) umfasst, wobei die hydraulische Kopplung (46) in einem ersten Modus dazu eingerichtet ist, einen Eintrag des Nockens (34) auf den Ventilteller (30) zu übertragen, um die Bewegung des Ventiltellers (30) zu bewirken, und wobei die hydraulische Kopplung (46) in einem zweiten Modus dazu eingerichtet ist, die Bewegung des Ventiltellers (30) zu unterbinden.

**10.** Viertaktverbrennungsmotor (2) nach Anspruch 9, bei dem die hydraulische Kopplung (46) einen mit der Nockenwelle (25) verbundenen ersten Kolben (70) und einen mit dem Ventilteller (30) verbundenen zweiten Kolben (72) aufweist, wobei der erste Kolben (70) eine größere Fläche hat als der zweite Kolben (72).

**11.** Viertaktverbrennungsmotor (2) nach einem der Ansprüche 1 bis 9, bei dem die Kopplungsanordnung (40) eine zwischen der Nockenwelle (25) und dem Ventilteller (30) angeordnete mechanische Kopplung (60) aufweist, wobei die mechanische Kopplung (60) in einem ersten Modus dazu eingerichtet ist, einen Eintrag des Nockens (34) auf den Ventilteller (30) zu übertragen, um die Bewegung des Ventiltellers (30) zu bewirken, und wobei die mechanische Kopplung (60) in einem zweiten Modus dazu eingerichtet ist, die Bewegung des Ventiltellers (30) zu unterbinden.

**12.** Viertaktverbrennungsmotor (2) nach Anspruch 10, bei dem die mechanische Kopplung (60) einen Hebel (62) aufweist, der in einem ersten Endbereich (63) mit der Nockenwelle (25) und in einem zweiten Endbereich (65) mit dem Ventilteller (30) verbunden ist, wobei der Hebel (62) um eine Achse (64') schwenkt, die solchermaßen angeordnet ist, dass der zweite Endabschnitt (65) eine größere Bewegungsgeschwindigkeit als der erste Endabschnitt (63) hat.

**13.** Fahrzeug (1) mit einem Viertaktverbrennungsmotor (2) nach einem der vorhergehenden Ansprüche.

## Revendications

**1.** Moteur à combustion interne à quatre temps (2) comprenant au moins un agencement de cylindre (4), un vilebrequin (20) et un arbre à cames (25), dans lequel

l'au moins un agencement de cylindre (4) forme une chambre de combustion (23) et comprend un alésage de cylindre (12), un piston (10) agencé pour effectuer un mouvement de va-et-vient dans l'alésage de cylindre (12), une bielle connectant le piston (10) avec le vilebrequin (20), et un agencement d'échappement (14) pour le flux sortant des gaz d'échappement à partir de l'alésage de cylindre (12), dans lequel

l'agencement de cylindre (4) a un volume maximum, $V_{MAX}$, entre un point mort bas, PMB, du piston (10) et une surface de délimitation interne supérieure (24) de la chambre de combustion (23), dans lequel

l'agencement d'échappement (14) comprend une soupape d'échappement (26) et une ouverture d'échappement (28), la soupape d'échappement (26) comprenant une tête de soupape (30) configurée pour assurer l'étanchéité contre un siège de soupape (32) de l'ouverture d'échappement (28), dans lequel

l'arbre à cames (25) comprend un lobe (34) configuré pour provoquer un mouvement de la tête de soupape (30) pour l'ouverture et la fermeture de l'ouverture d'échappement (28), dans lequel

et dans lequel

l'agencement d'échappement (14) comprend un agencement de liaison (40) configuré pour modifier le mouvement de la tête de soupape (30) provoqué par le lobe (34),

l'arbre à cames (25) est synchronisé avec le vilebrequin (20) pour tourner à une même vitesse de rotation que le vilebrequin (20), dans lequel

l'agencement de liaison (40) est configuré pour empêcher le mouvement de la tête de soupape (30) à chaque rotation alternée de l'arbre à cames (25), de sorte que l'ouverture d'échappement (28) reste fermée durant une course de compression du piston (10) **caractérisé en ce que**

le moteur à combustion interne à quatre temps comprend une turbine (8) et un conduit d'échappement (6) s'étendant à partir de l'ouverture d'échappement (28) vers une entrée de la turbine (8), dans lequel l'entrée (29) de la turbine (8) a une surface d'entrée de turbine, $A_{TIN}$, et dans lequel

le conduit d'échappement (6) a un volume de conduit d'échappement, $V_{EXH}, \leq 0,5$ fois le volume maximum, $V_{MAX}$.

**2.** Moteur à combustion interne à quatre temps (2) selon l'une quelconque des revendications précédentes, dans lequel le lobe (34) a une pente maximale de 0,5 mm / degré CA.

**3.** Moteur à combustion interne à quatre temps (2) selon l'une quelconque des revendications précédentes, dans lequel le mouvement de la tête de soupape (30) a une vitesse d'ouverture longitudinale maximale dans une plage de 3 - 5 m/s lorsque le moteur à combustion interne à quatre temps (2) fonctionne à une vitesse de rotation dans une plage de 800 - 1500 tr/min.

**4.** Moteur à combustion interne à quatre temps (2) selon l'une quelconque des revendications précédentes, dans lequel le mouvement de la tête de soupape (30) provoque une vitesse d'ouverture de surface maximale de l'ouverture d'échappement (28) dans une plage de 0,75 - 1,25 $m^2$/sec.

**5.** Moteur à combustion interne à quatre temps (2) selon l'une quelconque des revendications précédentes, dans lequel le volume de conduit d'échappement, $V_{EXH}$, exclut tous les volumes connectés au conduit d'échappement (6) via une connexion (7) ayant une surface de section transversale de connexion minimale, $A_{CON}$, $\leq 0,022$ fois le volume maximal, $V_{MAX}$.

**6.** Moteur à combustion interne à quatre temps (2) selon l'une quelconque des revendications précédentes, dans lequel le conduit d'échappement (6) connecte fluidiquement uniquement l'ouverture d'échappement (28) avec l'entrée (29) de la turbine (8).

**7.** Moteur à combustion interne à quatre temps (2) selon l'une quelconque des revendications précédentes, dans lequel la turbine (8) a une surface de flux effective normalisée, y, définie comme $\gamma = A_{TURB}/V_{MAX}$, dans lequel $\gamma >$ 0.22 $m^{-1}$, dans lequel $A_{TURB} = (A_{TIN}/A_{TOT}) * m'_{RED} * (R/ (K (2/ (K +1)^x) ) )^{1/2}$, dans lequel $X = (\kappa + 1) / (\kappa -1)$, dans lequel $A_{TOT}$ est une surface d'entrée totale de la turbine (8), et dans lequel $A_{TURB}$ est obtenu à un flux massique réduit, $m'_{RED}$, de la turbine (8) à un rapport de pression de 2,5 - 3,5 entre un côté d'entrée et un côté de sortie de la turbine (8) et à une vitesse de pointe de 450 m/s de la roue de turbine (27).

**8.** Moteur à combustion interne à quatre temps (2) selon l'une quelconque des revendications précédentes, dans lequel l'agencement de cylindre (4) a un volume balayé total, $V_s$, dans l'alésage de cylindre (12) entre un point mort bas, PMB, et un point mort haut, PMH, du piston (10), et dans lequel $0,3 < V_s < 4$ litres.

**9.** Moteur à combustion interne à quatre temps (2) selon l'une quelconque des revendications précédentes, dans lequel l'agencement de liaison (40) comprend une liaison hydraulique (46) agencée entre l'arbre à cames (25) et la tête de soupape (30), dans lequel la liaison hydraulique (46) dans un premier mode est configurée pour transférer une entrée du lobe (34) vers la tête de soupape (30) pour provoquer le mouvement de la tête de soupape (30), et dans lequel la liaison hydraulique (46) dans un deuxième mode est configurée pour empêcher le mouvement de la tête de soupape (30).

**10.** Moteur à combustion interne à quatre temps (2) selon la revendication 9, dans lequel la liaison hydraulique (46) comprend un premier piston (70) connecté à l'arbre à cames (25) et un deuxième piston (72) connecté à la tête de soupape (30), et dans lequel le premier piston (70) a une surface plus grande que le deuxième piston (72).

**11.** Moteur à combustion interne à quatre temps (2) selon l'une quelconque des revendications 1 - 9, dans lequel l'agencement de liaison (40) comprend une liaison mécanique (60) agencée entre l'arbre à cames (25) et la tête de soupape (30), dans lequel la liaison mécanique (60) dans un premier mode est configurée pour transférer une entrée du lobe (34) vers la tête de soupape (30) pour provoquer le mouvement de la tête de soupape (30), et dans lequel la liaison mécanique (60) dans un deuxième mode est configurée pour empêcher le mouvement de la tête de soupape (30).

**12.** Moteur à combustion interne à quatre temps (2) selon la revendication 10, dans lequel la liaison mécanique (60) comprend un levier (62) connecté sur une première partie d'extrémité (63) à l'arbre à cames (25) et sur une deuxième partie d'extrémité (65) à la tête de soupape (30), et dans lequel le levier (62) pivote autour d'un axe (64') agencé de sorte que la deuxième partie d'extrémité (65) ait une vitesse de déplacement supérieure à celle de la première partie d'extrémité (63).

**13.** Véhicule (1) comprenant un moteur à combustion interne à quatre temps (2) selon l'une quelconque des revendications précédentes.

Fig. 1

Fig. 2

Fig. 3

Fig. 4

Fig. 5

Fig. 6

Fig. 7

100

102 - rotating camshaft at same rotational speed as crankshaft

104 - preventing motion of valve head every alternate rotation of camshaft.

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4535592 A
- US 6244257 B
- US 20070144467 A
- US 5996550 A
- GB 2402708 A